# EUROPEAN PATENT APPLICATION

(11) **EP 4 618 600 A1**
(43) Date of publication of application: **17.09.2025**
(21) Application number: 24162924.5
(22) Date of filing: 12.03.2024
(51) Int. Cl.: H04W 4/44, G07B 15/06, H04W 4/80, H04B 1/3822

(54) **METHOD AND ON-BOARD-UNIT FOR DSRC**

(71) Applicant: Kapsch TrafficCom AG, 1120 Wien (AT)
(72) Inventor: SCHIDL, Stefan, 1100 Wien (AT)
(74) Representative: Weiser Voith Gugler Patentanwälte Partnerschaft

(57) **Abstract**

A method (35) for dedicated short-range communication, DSRC, of an on-board unit, OBU, (1) with at least two beacons (7₁ - 7s), each beacon using a different channel (9₁ - 9s) for transmitting a respective carrier signal (8₁ - 8₃), comprises: receiving (37) a receive signal (13) comprising the carrier signals of the beacons; downconverting (38) the receive signal to obtain a downconverted signal (16); filtering (39) all of said different channels out of the downconverted signal to obtain a filtered signal (18); modulating (40) an OBU response (20) onto the filtered signal to obtain a response signal (21); upconverting (41) the response signal to obtain an upconverted signal (23); and transmitting (42) the upconverted signal (23) to the beacons. An OBU is configured to carry out a DSRC with at least two beacons.

## Description

The present invention relates to a method for dedicated short-range communication (DSRC) of an on-board-unit (OBU) with at least two beacons. The present invention further relates to an OBU for DSRC with at least two beacons.

Communications between an OBU mounted on a vehicle passing a road, on the one hand, and two or more beacons (often called "roadside units" or "RSUs"), on the other hand, according a DSRC standard such as CEN DSR, ETSI EN 300 674-2-1, IEEE 802.11p, ARIB STD-T75, etc. are often utilised in Intelligent Transportation Systems (ITS) and vehicle tolling applications, e.g., to identify vehicles for surveillance, routing and tolling. In some applications, the OBU itself initiates the communication by automatically transmitting an OBU signal repetitively to the beacons. The present invention, however, is focused on applications where the beacons initiate the communication, each beacon transmitting a request signal which triggers the OBU to answer with its OBU signal in order to preclude unnecessary transmittals from the OBU and to reduce the required transmitting power in the OBU. Typically, the two or more beacons use different frequency channels to reduce interference and have different coverage areas, e.g., each covering a dedicated lane of a multi lane road, which may overlap to allow for communications also during a lane change of the vehicle.

Different communication paradigms and OBUs are known. For instance, an OBU of a first kind is configured to determine the strongest among the received request signals, i.e., of that beacon which has the strongest communication connection, and to answer only in the single channel of that request signal. This requires little transmitting power for the single-channel answer signal. However, determining the strongest request signal requires a complex signal analysis and hardware. Moreover, the beacon that has the strongest communication connection with the OBU may change during the passage of the vehicle, e.g., when the vehicle changes to a different coverage area, when the vehicle is concealed by another vehicle, when stray signals reflected by other vehicles interfere, etc. Thus, the OBU may answer in the wrong channel, e.g., to a beacon that does not or hardly cover the driven lane with such a poor communication connection that the OBU signal cannot be received by the beacon whose channel was chosen for communication. This applies especially when the OBU answers in a time-delayed manner, e.g., when the communication is based on a time-division duplex (TDD) scheme in which the beacons transmit their request signals within even time frames and the OBU transmits its OBU signal within one or more odd time frames, to preclude interference of the OBU and request signals. Hence, OBUs of this first kind are complex and tend to be unreliable in use.

An OBU of a second kind is configured to receive, from the beacons, the carrier signals of the respective channels, to indifferently modulate an OBU response onto the received signals and to transmit the result as its OBU signal. This ensures an answering to all received request signals and requires no knowledge about the channels, neither about their signal-strength, their number, nor their frequency position. Thus, the OBU's hardware may be simple, e.g., comprising only a modulator, and adding a new communication channel does not require any retrofitting. However, the indifferent treatment of the received signals also leads to a processing of unwanted signals, e.g., from nearby WLAN, Bluetooth, ZigBee or Z-Wave channels, which increases the required transmitting power and fosters channel crosstalk potentially impairing the DSRC channels as well as the adjoining channels not used for communication with the beacons.

It is an object of the present invention to overcome the deficiencies of the prior art and to provide a method and an OBU for DSRC which is both reliable and power-saving.

This object is achieved in a first aspect of the invention by a method for dedicated short-range communication (DSRC) of an on-board unit (OBU) with at least two beacons, the OBU being mounted on a vehicle passing the beacons on a road and each beacon using a different channel for transmitting a respective carrier signal, the method comprising the following steps carried out in the OBU:
receiving, by an input antenna, a receive signal comprising the carrier signals of the at least two beacons;
downconverting, by an input converter, the receive signal to obtain a downconverted signal;
filtering, by an input filter, all of said different channels out of the downconverted signal to obtain a filtered signal;
modulating, by a modulator, an OBU response onto the filtered signal to obtain a response signal;
upconverting, by an output converter, the response signal to obtain an upconverted signal; and
transmitting, by an output antenna, the upconverted signal to the at least two beacons.

The method of the invention provides both, a reliable answer of the OBU to the request signals of all beacons in form of the transmitted upconverted signal, as well as a power saving transmission due to the filtering of unwanted frequencies and channels, e.g., of WLAN, Bluetooth, ZigBee, Z-Wave, etc.

By downconverting the receive signal to intermediate band or baseband and upconverting the response signal later on, the frequencies of the desired DSRC channels are efficiently filtered out, i.e. let pass, from the downconverted signal, e.g. by means of a simple and inexpensive intermediate band or baseband input filter blocking the unwanted frequencies outside of the DSRC channels, to obtain the filtered signal. As the filtered signal includes the carriers of the channels of the at least two beacons in intermediate band or baseband, the OBU response is modulated directly onto these such that no elaborate carrier recovery is required to generate the OBU's response signal. Moreover, due to the filtering, a crosstalk between the used channels of the at least two beacons and the channels of other communications is suppressed.

On the one hand, the upconverted signal only includes the transmission channels of the at least two beacons, i.e. the channels to which the at least two beacons are configured to listen. Consequently, only these channels need to be transmitted by the output antenna of the OBU, which saves transmitting power. On the other hand, the upconverted signal includes all of the channels of the at least two beacons. Thus, the OBU may answer to all these beacons which initially, i.e., at the time of transmitting the carrier signals, were in communication connection with the OBU. As a result, even when the strength of the communication connection between one beacon and the OBU decreases during the passage of the vehicle, the OBU still answers to all beacons and, thus, also to the one with the strongest communication connection. Thus, the transmitted upconverted signal is received more reliably by one or more of the beacons.

The unwanted frequencies may be filtered out in different ways. In one favourable embodiment, the receive signal is downconverted to baseband to obtain the downconverted signal in said step of downconverting, and, in said step of filtering, the downconverted signal is low-pass filtered by blocking frequencies above a cut-off frequency lying substantially at the highest frequency of said different channels in the downconverted signal. It is noted that the term "substantially at the highest frequency" includes minor deviations from the highest frequency in the range of, e.g., five or ten percent. In this way, the input filter has a simple low-pass frequency response with one cut-off frequency and thus can be realised efficiently by means of simple and inexpensive hardware. When the channels of the at least two beacons are thereby optionally contiguous, no unnecessary frequencies of the DSRC frequency range are included in the filtered signal further reducing the required transmitting power and possible crosstalk.

In another favourable embodiment, in said step of downconverting, the receive signal is downconverted to intermediate band to obtain the downconverted signal, and, in said step of filtering, the downconverted signal is band-pass filtered by blocking frequencies below a lower cut-off frequency lying substantially at the lowest frequency of said different channels in the downconverted signal as well as frequencies above an upper cut-off frequency lying substantially at the highest frequency of said different channels in the downconverted signal. Again, the term "substantially at the lowest/highest frequency" includes minor deviations from the lowest/highest frequency in the range of, e.g., five or ten percent. In this way, the input filter has a more complex band-pass frequency response with two cut-off frequencies to block the unwanted bands but the steps of filtering and modulating are advantageously carried out in intermediate frequency, which allows to employ simple yet accurate hardware such as a linear, e.g., linear and time invariant (LTI), input filter and a low noise modulator.

In a beneficial optional variant of these favourable embodiments, at least two of said different channels are separated by a guard band that is blocked in said step of filtering, such that no unnecessary frequencies of the DSRC frequency range are included in the filtered signal further reducing the required transmitting power and crosstalk.

To remove, before upconverting and transmitting, any unwanted frequencies caused by signal processing, it is advantageous when the method further comprises, after said step of modulating, a further step of filtering, by an output filter, all of said different channels out of the response or upconverted signal. The output filter thus cleans the respective signal and further reduces the required transmitting power and possible crosstalk.

The OBU may process all of said signals in an analogue manner. In a preferred embodiment, however, at least one of the steps of downconverting, filtering, modulating, further filtering (if this step is present) and upconverting is processed digitally, and the method comprises the step of analogue-to-digital-converting the respective one of the receive, downconverted, filtered and response signals, and the step of digital-to-analogue-converting the respective one of the downconverted, filtered, response, and upconverted signals. Processing the respective signal/s digitally, e.g., in a software defined radio (SDR), reduces signal noise, distortion, and interference, and allows to accurately and flexibly realise a desired filter transfer function or modulation. As a result, the upconverted signal may have a particularly small amount of unwanted frequencies and its transmittal may require a particularly low transmitting power.

In a favourable embodiment, said steps of downconverting and filtering and/or said steps of modulating and upconverting are carried out in respective in-phase, I, and quadrature, Q paths on I and Q components of the respective signal. On the one hand, this allows to utilise both, the amplitude as well as the phase of the receive and/or upconverted signal for communication. On the other hand, when the I and Q components are related by a Hilbert transform according to a single-sideband (de-)modulation, this allows to eliminate mirror frequencies and, thus, to further reduce transmitting power and crosstalk.

In one embodiment, the OBU and the beacons may transmit their respective upconverted and carrier signals in an unsyn-chronised manner. In a preferred embodiment, however, said DSRC is performed according to a time division duplex (TDD) scheme, and the method further comprises, prior to said step of transmitting, determining, whether the OBU is allowed to transmit, and only if so, carrying out said step of transmitting. Thereby, interferences between the OBU and beacon signals are precluded such that the upconverted signal - not being superposed by the beacon signals - may be received at a lower signal strength and hence transmitted with a lower transmitting power.

The communication may be carried out in any DSRC frequency range, which may be partitioned in any number of channels, e.g. according to a DSRC standard such as CEN DSR, ETSI EN 300 674-2-1, IEEE 802.11p, ARIB STD-T75, etc. For instance, the different channels my each have a channel bandwidth in a range from 0,1 MHz to 50 MHz, preferably from 1 MHz to 12 MHz, particularly preferably from 4 MHz to 9 MHz, to provide sufficient channel bandwidth and a sufficient number of channels.

In a second aspect, the invention provides for an OBU for DSRC with at least two beacons each of which uses a different channel for transmitting a respective carrier signal, the OBU comprising:
an input antenna configured to receive a receive signal comprising the carrier signals of the at least two beacons;
an input converter configured to downconvert the receive signal to obtain a downconverted signal;
an input filter configured to filter all of said different channels out of the downconverted signal to obtain a filtered signal;
a modulator configured to modulate an OBU response onto the filtered signal to obtain a response signal;
an output converter configured to upconvert the response signal to obtain an upconverted signal; and
an output antenna configured to transmit the upconverted signal to the at least two beacons.

The OBU of the invention achieves both, a reliable answer to all request signals of the beacons as well as a power saving transmitting due to filtering of unwanted frequencies and channels similar to the above-mentioned method. To this end the OBU may utilise any of the above-mentioned embodiments to achieve the above-mentioned advantages. For instance, to accurately and flexibly realise any desired filter transfer function or modulation, the OBU favourably comprises a software defined radio (SDR) containing at least one of the input converter, the input filter, the modulator, the output filter, and the output converter, for digitally processing the respective signal/s, and an analogue-to-digital converter and a digital-to-analogue converter configured to convert the respective signals prior to and after digital processing, respectively.

The invention will now be described by means of exemplary embodiments thereof with reference to the enclosed drawings, in which show:
Fig. 1 an on-board unit (OBU) according to the invention, which is mounted on a vehicle passing three beacons on a road and performing a dedicated short-range communication (DSRC) with the three beacons, in a schematic top view;
Fig. 2 a first embodiment of the OBU of Fig. 1, in a schematic circuit diagram;
Fig. 3 an exemplary receive signal received by an input antenna of the OBU of Figs. 1 and 2, in an amplitude-frequency diagram;
Fig. 4 a downconverted signal obtained by an input converter of the OBU of Figs. 1 and 2 from the receive signal of Fig. 3, in an amplitude-frequency diagram;
Fig. 5 a filtered signal obtained by an input filter of the OBU of Figs. 1 and 2 from the downconverted signal of Fig. 4, in an amplitude-frequency diagram;
Fig. 6 a response signal obtained by a modulator of the OBU of Figs. 1 and 2 from the filtered signal of Fig. 5, in an amplitude-frequency diagram;
Fig. 7 an upconverted signal obtained by an output converter of the OBU of Figs. 1 and 2 from the response signal of Fig. 6 and as transmitted by an output antenna of the OBU of Figs. 1 and 2, in an amplitude-frequency diagram;
Fig. 8 a second embodiment of the OBU of Fig. 1, in a schematic circuit diagram;
Fig. 9 a filtered signal obtained by an input filter of the OBU of Fig. 8 from the receive signal of Fig. 3, in an amplitude-frequency diagram;
Fig. 10 a third embodiment of the OBU of Fig. 1, in a schematic circuit diagram; and
Fig. 11 a method according to the invention as carried out by the OBU of Figs. 1, 7 and 9, respectively, in a flow diagram.

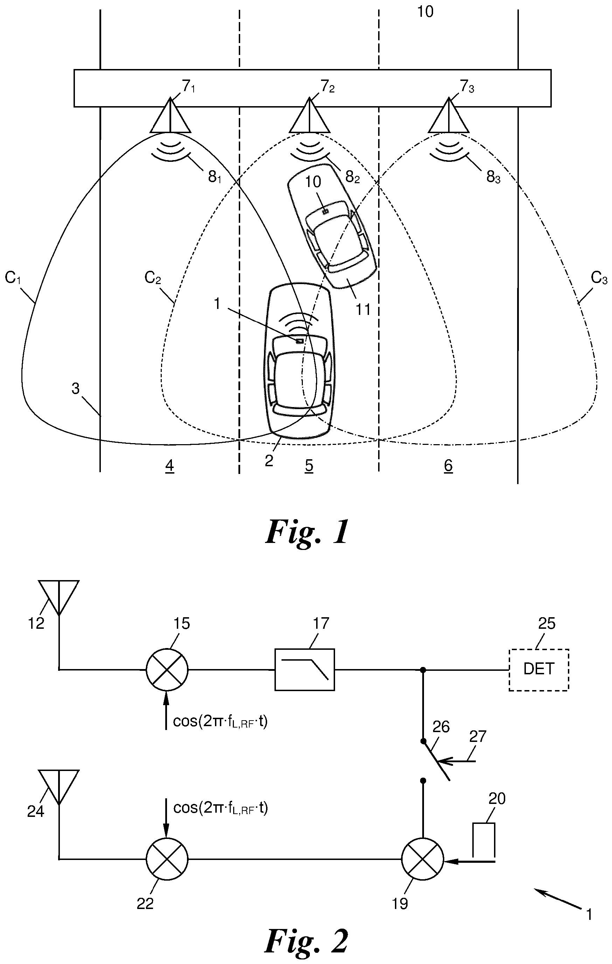

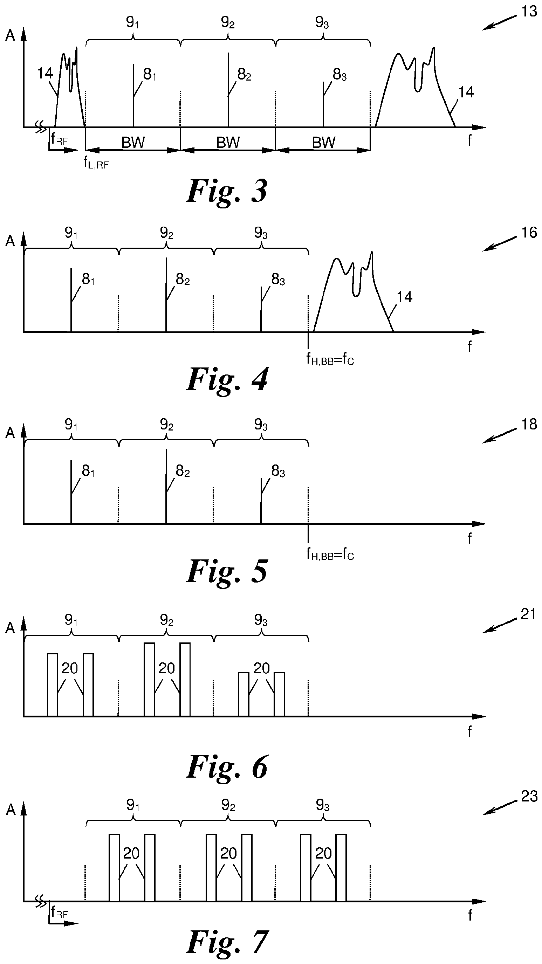

Fig. 1 shows an on-board unit (OBU) 1 that is mounted on a vehicle 2 driving on a road 3 which has three lanes 4 - 6. The OBU 1 communicates, by means of a dedicated short-range communication (DSRC) according to a DSRC standard such as CEN DSR, ETSI EN 300 674-2-1, IEEE 802.11p, ARIB STD-T75, etc., with two or more (here: three) beacons 7₁ - 7₃ that are located at the road 3 (here: above the lanes 4 - 6) and passed by the vehicle 2, e.g., to identify, survey, toll, or guide the vehicle 2. To this end, each beacon 7₁ - 7₃ transmits a respective carrier signal 8₁ - 8₃ in a different channel 9₁ - 9₃ (Fig. 3) and in a respective coverage area C₁, C₂, C₃, wherein the coverage areas C₁ - C₃ of the beacons 7₁ - 7₃ optionally overlap. It is understood that the signals transmitted by the beacons 7₁ - 7₃ may also carry information modulated onto the carrier signals 8₁ - 8₃. Upon receiving the carrier signals 8₁ - 8₃ the OBU 1 answers thereto, either once or repeatedly, and either instantly or in a time-delayed manner, e.g., according to a time-division duplex (TDD) scheme.

During the passage of the vehicle 1, the communication connection to the beacons 7₁ - 7₃ may change and even be interrupted for one or more of the beacons 7₁ - 7₃, e.g., due to an interference with other DSRC or non-DSRC signals of other devices such as another OBU 10 mounted on another vehicle 11, a smartphone, etc., due to signal reflections, etc. Hence, the OBU 1 answers in all the channels 9₁ - 9₃ in order to communicate with as many of the beacons 7₁ - 7₃ as possible for including at least that one the beacons 7₁ - 7₃ that has the strongest communication connection at the moment of answering.

An exemplary answering shall be described with reference to Figs. 2 - 7, Fig. 2 depicting a first exemplary embodiment of the OBU 1 and Figs. 3 - 7 respective signals processed by the OBU 1.

The OBU 1 in the example of Fig. 2 comprises an input antenna 12 which receives a receive signal 13 shown in Fig. 3. The receive signal 13 comprises the carrier signals 8₁ - 8₃ of at least two (here: of all three) of the beacons 7₁ - 7₃ in the respective channels 9₁ - 9₃ at radio-frequency f_{RF}. The bandwidth BW of each channel 9₁ - 9₃ may be in any range according to a DSRC standard, e.g., in a range from 0,1 MHz to 50 MHz, preferably from 1 MHz to 12 MHz, particularly preferably from 4 MHz to 9 MHz, e.g., about 5 MHz. In addition to the desired channels 9₁ - 9s, the receive signal 13 comprises unwanted signal components 14 caused by non-desirable DSRC or non-DSRC communications.

The receive signal 13 is downconverted by an input converter 15 of the OBU 1 to obtain a downconverted signal 16 shown in Fig. 4. The exemplary input converter 15 of Fig. 2 converts the receive signal 13 down to baseband by mixing the receive signal 13 with a cosine mixing signal cos(2π·f_{L,RF}·t), wherein f_{L,RF} denotes the lowest frequency of the channels 9₁ - 9₃ at radio-frequency. In alternative embodiments, other mixing signals may be used.

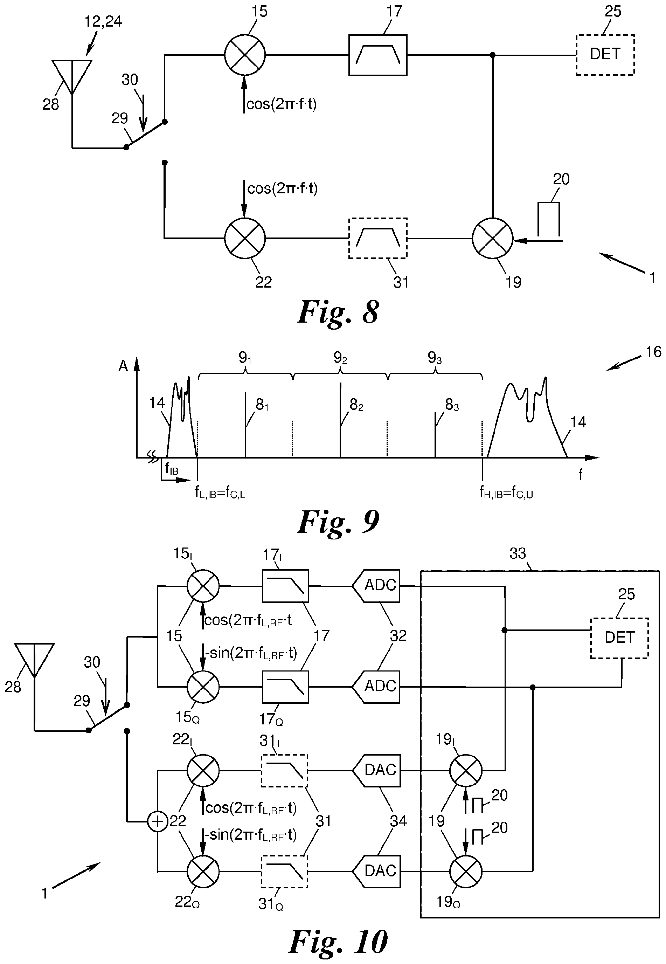

An input filter 17 of the OBU 1 filters all of the different channels 9₁ - 9₃ out of the downconverted signal 16 for further use to obtain the filtered signal 18 shown in Fig. 5. Hence, the input filter 17 lets pass ("filters out") only the desired channels 9₁ - 9₃ used for DSRC and blocks the non-desirable channels and frequencies, e.g., of the non-desirable signal components 14. To this end, the exemplary input filter 17 of Fig. 2 is a low-pass filter and has a cut-off frequency f_{C} which lies substantially at the highest frequency f_{H,BB} of the different channels 9₁ - 9₃ in the downconverted signal 16, in Fig. 5: in baseband. In this context "substantially at the highest frequency f_{H,BB}" includes minor deviations from the highest frequency f_{H,BB}, e.g., in the range of five or ten percent, keeping the input filter 17 narrowbanded while blocking the non-desirable signal components 14 to a large extent. In alternative embodiments, other filter transfer functions may be used, e.g., as described below with reference to Figs. 8 and 9.

Downstream of the input filter 17, the OBU 1 comprises a modulator 19 which modulates an OBU response 20 onto the filtered signal 18 to obtain a response signal 21 shown in Fig. 6. The OBU response 20 may include any information used for vehicle identification, surveillance, tolling, routing, etc. and may be modulated onto the filtered signal 18 using any modulation, e.g., an amplitude modulation, a frequency modulation, a phase modulation, in particular a phase shift keying like a binary phase shift keying (BPSK) or quadrature phase shift keying (QPSK).

The OBU 1 further comprises an output converter 22 which converts the response signal 21 up to radio-frequency f_{RF} to obtain an upconverted signal 23 shown in Fig. 7. The exemplary output converter 23 of Fig. 2 converts the response signal 21 up by mixing the response signal 21 with a cosine mixing signal cos(2π·f_{L,RF}·t), wherein f_{L,RF} again denotes the lowest frequency of the channels 9₁ - 9₃ at radio frequency f_{RF} (Fig. 3). In alternative embodiments, other mixing signals may be used, e.g., as described below with reference to Figs. 8 and 9.

The upconverted signal 23 may optionally be amplified as indicated by the signal amplitudes of Figs. 6 and 7 by an amplifier (not shown), optionally be filtered by a high-pass filter to eliminate mirror frequencies (not shown), and is finally transmitted by an output antenna 24 of the OBU 1 towards the beacons 7₁ - 7₃. As the upconverted signal 23 includes the OBU response 20 in all of the channels 7₁ - 7₃, a subsequent reception of the transmitted upconverted signal 23 at one of the beacons 7₁ - 7₃, e.g. at the one with the strongest communication channel at the transmission time, suffices to successfully communicate the OBU response 20 to the beacons 7₁ - 7₃.

As indicated by the dashed lines in in Fig. 2, the OBU 1 optionally comprises a detector 25 for detecting the filtered signal 18, and/or a switch 26 for initiating signal transmission. For instance, when a TDD scheme is applied, the beacons 7₁ - 7₃ may synchronise the OBU 1 by means of predetermined signals. In one example, the beacons 7₁ - 7₃ transmit signals carrying information modulated onto the carriers 8₁ - 8₃ at even TDD frames and only the carriers 8₁ - 8₃ at odd TDD frames. Hence, when the detector 19 detects the carriers 8₁ - 8₃ only, it may close the switch 26 as indicated by actuation arrow 27 to initiate the modulating, upconverting and transmitting. In another example, the beacons 7₁ - 7₃ transmit the carriers 8₁ - 8₃ at even TDD frames and are silent at odd TDD frames. Hence, the detector 25 may close the switch 26 when it detects no carriers 8₁ - 8₃ in the filtered signal 18. In still other embodiments, the detector 25 is not present, e.g., when the switch 26 is actuated by a system clock (not shown) synchronising the TDD frames, when no TDD scheme is used and when no switching for transmitting is used, etc.

With reference to Figs. 8 and 9, an exemplary second embodiment of the OBU 1 utilising an alternative antenna setup, an intermediate band processing, and an output filtering shall now be described.

The OBU 1 in the example of Fig. 8 utilises one and the same antenna 28 as input and output antenna 12, 24. The switching between receiving (input antenna 12) and transmitting (output antenna 24) is carried out by a further switch 29 which is actuated as indicated by actuation arrow 30, e.g., similar to the switch 26 of Fig. 2 by the optional detector 25 or a system clock (not shown). The switch 26 and the further switch 29 may each be embodied as any switch or direction control known in the art, e.g., as a (switching) circulator, a PIN diode switch, a field effect transistor switch etc.

The OBU 1 shown in Fig. 8 processes the respective signals in intermediate band. Hence, the input converter 15 of the OBU 1 of Fig. 8 converts the receive signal 13 down to intermediate band to obtain the downconverted signal 16 shown in Fig. 9, e.g., by mixing the receive signal 13 with a suitable cosine mixing signal cos(2π·f·t). The input filter 17 of the OBU 1 of Fig. 8 is a bandpass filter the lower cut-off frequency f_{C,L} of which lies substantially at the lowest frequency f_{L,IB} of the different channels 9₁ - 9₃ in the downconverted signal 16, i.e. in intermediate band f_{IB}, and whose upper cut-off frequency f_{C,U} lies substantially at that highest frequency f_{H,IB} of the different channels 9₁ - 9₃ in the downconverted signal 16, i.e. in intermediate band f_{IB} (Fig. 9). As in the example of Fig. 2, the term "substantially" includes a deviation of about five or ten percent. Thus, the input filter 17 of Fig. 8 blocks the unwanted signal components 14 below as well as above the channels 9₁ - 9₃ shown in Fig. 9 to obtain the filtered signal 18, and, in case the channels 9₁ - 9₃ are separated by guard bands (not shown), optionally also the guard bands.

Thereafter, the modulator 19 of the OBU 1 in the example of Fig. 8 modulates the OBU response 20 onto the filtered signal 16 in intermediate band f_{IB} to obtain the response signal 21 in intermediate band f_{IB}, and the output converter 22 of the OBU 1 converts the response signal 21 from intermediate band f_{IB} up to radio frequency f_{RF} to obtain the upconverted signal 23.

In the example of Fig. 8, the OBU 1 further comprises an optional output filter 31 which is interposed between the modulator 19 and the output antenna 24, 28, i.e. between the modulator 19 and the output converter 22 (Fig. 8) or between the output converter 22 and the output antenna 24, 28 (not shown). The output filter 31, similar to the input filter 17, filters all of the channels 9₁ - 9₃ out of the response signal 21 or the upconverted signal 23 (not shown).

With reference to Fig. 10 an exemplary third embodiment of the OBU 1 utilising digital signal processing and an I-/Q-modulation scheme shall be described below.

The OBU 1 in the example of Fig. 10 provides an in phase path ("I path") and a quadrature path ("Q path") for I and Q components of the respective signals. The input converter 15 has I- and Q-input converters 15_{I}, 15_{Q} mixing the receive signal 13 with phase-offset mixing signals cos(2π·f_{L,RF}·t) and -sin(2π·f_{L,RF}·t) to obtain respective I- and Q-components of the downconverted signal 16 (here: at baseband, alternatively: at intermediate band as described above). The input filter 17 has I- and Q-input filters 17_{I}, 17_{Q} filtering the respective I- and Q-component of the downconverted signal 16 to obtain respective I- and Q-components of the filtered signal 18. The modulator 19 has I- and Q-modulators 19_{I}, 19_{Q} modulating the OBU response 20 onto the respective I- and Q-component of the filtered signal 18 to obtain respective I- and Q-components of the response signal 21. The optional output filter 31 has I- and Q-output filters 31_{I}, 31_{Q} filtering all of the channels 9₁ - 9₃ out of the respective I- and Q-component of the response signal 21. And the output converter 22 has I- and Q-output converters 22_{I}, 22_{Q} mixing the respective component of the response signal 21 with phase-offset mixing signals cos (2π·f_{L,RF}·t) and -sin(2π·f_{L,RF}·t) to obtain respective I and Q-components of the upconverted signal 23 which are added and transmitted by the output antenna 24, 28 towards the beacons 7₁ - 7s. The I- and Q-components may be used to convey both amplitude and phase information, or to cancel mirror frequencies (not shown in Figs. 3 to 7 and 9) in a single sideband (SSB) scheme.

In the example of Fig. 10, the OBU 1 carries out the modulation and the detection digitally, which is optional. To this end, the OBU 1 has an analogue-to-digital converter (ADC) 32 converting the filtered signal 18 (here: the I- and Q-components thereof) from analogue to digital, a software defined radio (SDR) 33 which embodies the modulator 19 and the detector 25 digitally, e.g., by means of a processor, and a digital-to-analogue (DAC) converter converting the response signal 23 (here: the I- and Q-components thereof) from digital back to analogue. Alternatively, any other combination of the input converter 15, the input filter 17, the detector 25 (if present), the modulator 19, the output filter 31 (if present) and the output converter 22 may be embodied digitally by the SDR 33, as long as the ADC 32 is arranged upstream the SDR 33 and the DAC 34 is arranged downstream the SDR 33 to convert the respective signals, prior to and after digital processing.

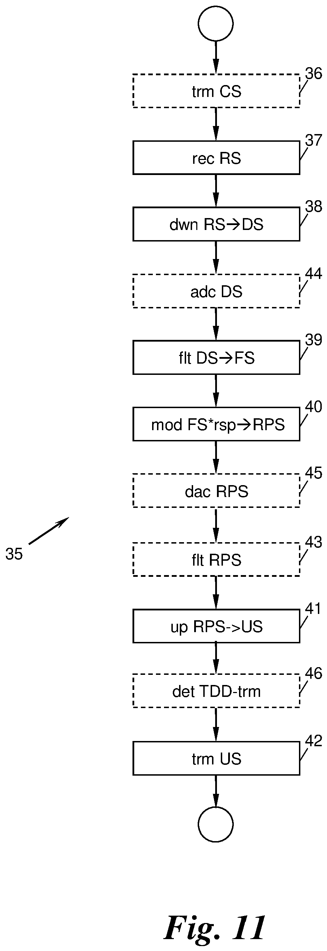

Fig. 11 illustrates a method 35 for DSCR between the OBU 1 and the at least two beacons 7₁ - 7₃. The method 35 may be carried out by the OBU 1 and may utilise any of the above-mentioned embodiments and variants of the OBU 1 and/or the above-mentioned functions in corresponding method steps.

In an antecedent step 36, which may or may not be part of the method 35, each of the at least two beacons 7₁ - 7₃ transmits a respective carrier signal 8₁ - 8₃ in a different channel 9₁ - 9₃. Each of the channels 9₁ - 9₃ may optionally have a bandwidth BW (Fig. 3) in a range from 0,1 MHz to 50 MHz, particularly from 1 MHz to 12 MHz, e.g., from 4 MHz to 9 MHz, optionally about 5 MHz.

In a first step 37 of the method 35, the receive signal 13 comprising the carrier signals 8₁ - 8₃ of at the least two beacons 7₁ - 7₃ is received by the input antenna 12, e.g., as described above with reference to Figs. 2, 3 and 8.

In a second step 38 of the method 35, the receive signal 13 is downconverted by the input converter 15 to obtain the downconverted signal 16, e.g., as described above with reference to Figs. 2, 4, 8 and 9.

In a third step 39 of the method 35, all of the channels 9₁ - 9₃ are filtered out of the downconverted signal 16 by the input filter 17 for further use to obtain the filtered signal 18, e.g., as described above with reference to Figs. 2, 5, 8, 9 and 10. When the receive signal 13 has been downconverted to baseband in step 38 of downconverting, the downconverted signal 16 may be low-pass filtered by blocking frequencies above the cut-off frequency f_{C} which lies substantially at the highest frequency f_{H,BB} of the channels 9₁ - 9₃ (Figs. 4 and 5). When the receive signal 13 has been downconverted to intermediate band in step 38 of downconverting, the downconverted signal 16 may be band-pass filtered by blocking frequencies below the lower cut-off frequency f_{C,L} which lies substantially at the lowest frequency f_{L,IB} of the channels 9₁ - 9₃ as well as frequencies above the upper cut-off frequency f_{C,U} which lies substantially at the highest frequency f_{H,IB} of the channels 9₁ - 9₃ (Fig. 9). When the channels 9₁ - 9₃ are separated by one or more guard bands, these guard band/s may optionally be blocked as well.

In a fourth step 40 of the method 35, the OBU response 20 is modulated onto the filtered signal 18 by the modulator 19 to obtain the response signal 21, e.g., as described above with reference to Figs. 2, 6, 8 and 10.

In a sixth step 41 of the method 35, the response signal 21 is upconverted by the output converter 22 to obtain the upconverted signal 23, e.g., as described above with reference to Figs. 2, 7, 8 and 10.

In a seventh step 42 of the method 35, the upconverted signal 23 is transmitted by the output antenna 24 to the beacons 7₁ - 7₃, e.g., as described above with reference to Figs. 2, 7, 8 and 10, such that it shall be received by at least one of the beacons 7₁ - 7₃.

After said step 40 of modulating, the channels 9₁ - 9₃ may be filtered out from the response signal 21 or the upconverted signal 23 by the output filter 31 in an optional further filtering step 43, e.g., as described above with reference to Fig. 8 or 9.

As indicated by the optional steps 44 of analogue-to-digital converting (here: of the downconverted signal 16) and digital-to-analogue converting 45 (here: of the response signal 40), any combination of the steps 38 - 42 (and 43, if performed) may optionally be carried out digitally, e.g., in the SDR 33. Thereby, step 44 precedes and step 45 follows the step/s carried out digitally, e.g., as described above with reference to Fig. 10.

When the DSRC is optionally performed according to a TDD scheme, the method 35 may further comprise an optional step 46 of determining, whether the OBU 1 is allowed to transmit according to the TDD scheme, e.g., as explained above with reference to the switches 26 and 29 in Figs. 2 and 8. Then, step 42 of transmitting is only carried out, when it has been determined that the OBU 1 is allowed to transmit. Step 46 of determining is carried out prior to the step 42 of transmitting, e.g., directly before step 42 of transmitting, directly before step 40 of modulating.

In an optional embodiment of the method 35, steps 38, 39 of downconverting and filtering and/or the steps 40, 41 of modulating and upconverting are carried out in respective in-phase (I) and quadrature (Q) paths on I and Q components of the respective signal, e.g., as described above with reference to Fig. 10.

The invention is not restricted to the specific embodiments disclosed herein, but encompasses all variants, modifications and combinations thereof that fall within the scope of the appended claims, in particular combinations of the exemplary embodiments of the OBU 1 of Figs. 2, 8 and 10.

## Claims

1. A method for dedicated short-range communication, DSRC, of an on-board unit, OBU, (1) with at least two beacons (7₁ - 7₃), the OBU (1) being mounted on a vehicle (2) passing the beacons (7₁ - 7₃) on a road (3) and each beacon (7₁ - 7₃) using a different channel (9₁ - 9₃) for transmitting a respective carrier signal (8₁ - 8₃), the method (35) comprising the following steps carried out in the OBU (1):
receiving (37), by an input antenna (12), a receive signal (13) comprising the carrier signals (9₁ - 9₃) of the at least two beacons (7₁ - 7₃);
downconverting (38), by an input converter (15), the receive signal (13) to obtain a downconverted signal (16);
filtering (39), by an input filter (17), all of said different channels (9₁ - 9₃) out of the downconverted signal (16) to obtain a filtered signal (18);
modulating (40), by a modulator (19), an OBU response (20) onto the filtered signal (18) to obtain a response signal (21);
upconverting (41), by an output converter (22), the response signal (21) to obtain an upconverted signal (23); and
transmitting (42), by an output antenna (24), the upconverted signal (23) to the at least two beacons (7₁ - 7₃).

2. The method according to claim 1, wherein, in said step of downconverting (38), the receive signal (13) is downconverted to baseband to obtain the downconverted signal (16), and
wherein, in said step of filtering (39), the downconverted signal (16) is low-pass filtered by blocking frequencies above a cut-off frequency (f_{C}) lying substantially at the highest frequency (f_{H,BB}) of said different channels (9₁ - 9₃) in the downconverted signal (16)).

3. The method according to claim 1, wherein, in said step of downconverting (38), the receive signal (13) is downconverted to intermediate band to obtain the downconverted signal (16), and
wherein, in said step of filtering (39), the downconverted signal (16) is band-pass filtered by blocking frequencies below a lower cut-off frequency (f_{C,L}) lying substantially at the lowest frequency (f_{L,IB}) of said different channels (9₁ - 9₃) in the downconverted signal (16) as well as frequencies above an upper cut-off frequency (f_{C,U}) lying substantially at the highest frequency (f_{H,IB}) of said different channels (9₁ - 9₃) in the downconverted signal (16).

4. The method according to claim 2 or 3, wherein at least two of said different channels (9₁ - 9₃) are separated by a guard band that is blocked in said step of filtering (39).

5. The method according to any one of claims 1 to 4, further comprising, after said step of modulating (40), a further step of filtering (43), by an output filter (31), all of said different channels (9₁ - 9₃) out of the response or upconverted signal (21, 23).

6. The method according to any one of claims 1 to 5, wherein at least one of the steps of downconverting (38), filtering (39), modulating (40), further filtering (43) and upconverting (41) is processed digitally, and
wherein the method (35) comprises the step of analogue-to-digital-converting (44) the respective one of the receive, downconverted, filtered and response signals (13, 16, 18, 21), and the step of digital-to-analogue-converting (45) the respective one of the downconverted, filtered, response, and upconverted signals (16, 18, 21, 23).

7. The method according to any one of claims 1 to 6, wherein said steps of downconverting (38) and filtering (39) and/or said steps of modulating (40) and upconverting (41) are carried out in respective in-phase, I, and quadrature, Q paths (15_{I}, 17_{I}, 19_{I}, 22_{I}; 15_{Q}, 17_{Q}, 19_{Q}, 22_{Q}) on I and Q components of the respective signal (13, 16; 18, 21).

8. The method according to any one of claims 1 to 7, wherein said DSRC-communication is performed according to a time division duplex, TDD, scheme, and the method (35) further comprises, prior to said step of transmitting (42), determining (46), whether the OBU (1) is allowed to transmit, and only if so, carrying out said step of transmitting (42).

9. The method according to any one of claims 1 to 8, wherein the different channels (7₁ - 7₃) each have a channel bandwidth (BW) in a range from 0,1 MHz to 50 MHz, preferably from 1 MHz to 12 MHz, particularly preferably from 4 MHz to 9 MHz.

10. On-board unit, OBU, for dedicated short-range communication, DSRC, with at least two beacons (7₁ - 7₃) each of which uses a different channel (9₁ - 9₃) for transmitting a respective carrier signal (8₁ - 8₃), the OBU (1) comprising:
an input antenna (12, 28) configured to receive a receive signal (13) comprising the carrier signals (8₁ - 8₃) of the at least two beacons (7₁ - 7₃);
an input converter (15) configured to downconvert the receive signal (13) to obtain a downconverted signal (16);
an input filter (17) configured to filter all of said different channels (9₁ - 9₃) out of the downconverted signal (16) to obtain a filtered signal (18);
a modulator (19) configured to modulate an OBU response (20) onto the filtered signal (18) to obtain a response signal (21) ;
an output converter (22) configured to upconvert the response signal (21) to obtain an upconverted signal (23); and
an output antenna (12, 28) configured to transmit the upconverted signal (23) to the at least two beacons (7₁ - 7₃).

11. The OBU according to claim 10, wherein the input converter (15) is configured to downconvert the receive signal (13) to baseband to obtain the downconverted signal (16), and
wherein the input filter (17), for said filtering, comprises a low-pass filter having a cut-off frequency (f_{C}) lying substantially at the highest frequency (f_{H,BB}) of said different channels (9₁ - 9₃) in the downconverted signal (16).

12. The OBU according to claim 10, wherein the input converter (15) is configured to downconvert the receive signal (13) to intermediate band to obtain the downconverted signal (16),
wherein the input filter (17), for said filtering, comprises a band-pass filter having a lower cut-off frequency (f_{C,L}) lying substantially at the lowest frequency (f_{L,IB}) of said different channels (9₁ - 9₃) in the downconverted signal (16) and an upper cut-off frequency (f_{C,U}) lying substantially at the highest frequency (f_{H,IB}) of said different channels (9₁ - 9₃) in the downconverted signal (16).

13. The OBU according to any one of claims 10 to 12, further comprising an output filter (31) interposed between the modulator (19) and the output antenna (24, 28) and configured to filter all of said different channels (9₁ - 9₃) out of the response or upconverted signal (21, 23).

14. The OBU according to any one of claims 10 to 13, comprising a software defined radio, SDR, (33) containing at least one of the input converter (15), the input filter (17), the modulator (19), the output filter (31), and the output converter (22), for digitally processing the respective signal/s, and an analogue-to-digital converter (32) and a digital-to-analogue converter (33) configured to convert the respective signals (13, 16, 18, 21) prior to and after digital processing, respectively.

15. The OBU according to any one of claims 10 to 14, wherein the input converter (15) and the input filter (17), on the one hand, and/or the modulator (19) and the output converter (22), on the other hand, each comprise an in-phase, I, path and a quadrature, Q, path (15_{I}, 17_{I}, 19_{I}, 22_{I}; 15_{Q}, 17_{Q}, 19_{Q}, 22_{Q}).

## Amended claims

### Amended claims in accordance with Rule 137(2) EPC.

1. A method for dedicated short-range communication, DSRC, of an on-board unit, OBU, (1) with at least two beacons (7₁ - 7₃), the OBU (1) being mounted on a vehicle (2) passing the beacons (7₁ - 7₃) on a road (3) and each beacon (7₁ - 7₃) using a different channel (9₁ - 9₃) for transmitting a respective carrier signal (8₁ - 8₃) only, the method (35) comprising the following steps carried out in the OBU (1):
receiving (37), by an input antenna (12), a receive signal (13) comprising the carrier signals (9₁ - 9₃) of the at least two beacons (7₁ - 7₃) ;
downconverting (38), by an input converter (15), the receive signal (13) to obtain a downconverted signal (16);
filtering (39), by an input filter (17), all of said different channels (9₁ - 9₃) out of the downconverted signal (16) to obtain a filtered signal (18);
modulating (40), by a modulator (19), an OBU response (20) onto the filtered signal (18) to obtain a response signal (21);
upconverting (41), by an output converter (22), the response signal (21) to obtain an upconverted signal (23); and
transmitting (42), by an output antenna (24), the upconverted signal (23) to the at least two beacons (7₁ - 7₃).

2. The method according to claim 1, wherein, in said step of downconverting (38), the receive signal (13) is downconverted to baseband to obtain the downconverted signal (16), and
wherein, in said step of filtering (39), the downconverted signal (16) is low-pass filtered by blocking frequencies above a cut-off frequency (f_{C}) lying substantially at the highest frequency (f_{H,BB}) of said different channels (9₁ - 9₃) in the downconverted signal (16)).

3. The method according to claim 1, wherein, in said step of downconverting (38), the receive signal (13) is downconverted to intermediate band to obtain the downconverted signal (16), and
wherein, in said step of filtering (39), the downconverted signal (16) is band-pass filtered by blocking frequencies below a lower cut-off frequency (f_{C,L}) lying substantially at the lowest frequency (f_{L,IB}) of said different channels (9₁ - 9₃) in the downconverted signal (16) as well as frequencies above an upper cut-off frequency (f_{C,U}) lying substantially at the highest frequency (f_{H,IB}) of said different channels (9₁ - 9₃) in the downconverted signal (16).

4. The method according to claim 2 or 3, wherein at least two of said different channels (9₁ - 9₃) are separated by a guard band that is blocked in said step of filtering (39).

5. The method according to any one of claims 1 to 4, further comprising, after said step of modulating (40), a further step of filtering (43), by an output filter (31), all of said different channels (9₁ - 9₃) out of the response or upconverted signal (21, 23).

6. The method according to any one of claims 1 to 5, wherein at least one of the steps of downconverting (38), filtering (39), modulating (40), further filtering (43) and upconverting (41) is processed digitally, and
wherein the method (35) comprises the step of analogue-to-digital-converting (44) the respective one of the receive, downconverted, filtered and response signals (13, 16, 18, 21), and the step of digital-to-analogue-converting (45) the respective one of the downconverted, filtered, response, and upconverted signals (16, 18, 21, 23).

7. The method according to any one of claims 1 to 6, wherein said steps of downconverting (38) and filtering (39) and/or said steps of modulating (40) and upconverting (41) are carried out in respective in-phase, I, and quadrature, Q paths (15_{I}, 17_{I}, 19_{I}, 22_{I}; 15_{Q}, 17_{Q}, 19_{Q}, 22_{Q}) on I and Q components of the respective signal (13, 16; 18, 21).

8. The method according to any one of claims 1 to 7, wherein said DSRC-communication is performed according to a time division duplex, TDD, scheme, and the method (35) further comprises, prior to said step of transmitting (42), determining (46), whether the OBU (1) is allowed to transmit, and only if so, carrying out said step of transmitting (42).

9. The method according to any one of claims 1 to 8, wherein the different channels (7₁ - 7₃) each have a channel bandwidth (BW) in a range from 0,1 MHz to 50 MHz, preferably from 1 MHz to 12 MHz, particularly preferably from 4 MHz to 9 MHz.

10. On-board unit, OBU, for dedicated short-range communication, DSRC, with at least two beacons (7₁ - 7₃) each of which uses a different channel (9₁ - 9₃) for transmitting a respective carrier signal (8₁ - 8₃) only, the OBU (1) comprising:
an input antenna (12, 28) configured to receive a receive signal (13) comprising the carrier signals (8₁ - 8₃) of the at least two beacons (7₁ - 7₃);
an input converter (15) configured to downconvert the receive signal (13) to obtain a downconverted signal (16);
an input filter (17) configured to filter all of said different channels (9₁ - 9₃) out of the downconverted signal (16) to obtain a filtered signal (18);
a modulator (19) configured to modulate an OBU response (20) onto the filtered signal (18) to obtain a response signal (21);
an output converter (22) configured to upconvert the response signal (21) to obtain an upconverted signal (23); and
an output antenna (12, 28) configured to transmit the upconverted signal (23) to the at least two beacons (7₁ - 7₃).

11. The OBU according to claim 10, wherein the input converter (15) is configured to downconvert the receive signal (13) to baseband to obtain the downconverted signal (16), and
wherein the input filter (17), for said filtering, comprises a low-pass filter having a cut-off frequency (f_{C}) lying substantially at the highest frequency (f_{H,BB}) of said different channels (9₁ - 9₃) in the downconverted signal (16).

12. The OBU according to claim 10, wherein the input converter (15) is configured to downconvert the receive signal (13) to intermediate band to obtain the downconverted signal (16),
wherein the input filter (17), for said filtering, comprises a band-pass filter having a lower cut-off frequency (f_{C,L}) lying substantially at the lowest frequency (f_{L,IB}) of said different channels (9₁ - 9₃) in the downconverted signal (16) and an upper cut-off frequency (f_{C,U}) lying substantially at the highest frequency (f_{H,IB}) of said different channels (9₁ - 9₃) in the downconverted signal (16).

13. The OBU according to any one of claims 10 to 12, further comprising an output filter (31) interposed between the modulator (19) and the output antenna (24, 28) and configured to filter all of said different channels (9₁ - 9₃) out of the response or upconverted signal (21, 23).

14. The OBU according to any one of claims 10 to 13, comprising a software defined radio, SDR, (33) containing at least one of the input converter (15), the input filter (17), the modulator (19), the output filter (31), and the output converter (22), for digitally processing the respective signal/s, and an analogue-to-digital converter (32) and a digital-to-analogue converter (33) configured to convert the respective signals (13, 16, 18, 21) prior to and after digital processing, respectively.

15. The OBU according to any one of claims 10 to 14, wherein the input converter (15) and the input filter (17), on the one hand, and/or the modulator (19) and the output converter (22), on the other hand, each comprise an in-phase, I, path and a quadrature, Q, path (15_{I}, 17_{I}, 19_{I}, 22_{I}; 15_{Q}, 17_{Q}, 19_{Q}, 22_{Q}).
